# EUROPEAN PATENT APPLICATION

(11) **EP 4 382 322 A1**
(43) Date of publication of application: **12.06.2024**
(21) Application number: 22211894.5
(22) Date of filing: 07.12.2022
(51) Int. Cl.: B60D 1/62, B60T 17/22, B60T 8/17, B60T 13/26

(54) **METHOD AND SYSTEM FOR DETECTING THE PRESENCE OF A TRAILER**

(71) Applicant: KNORR-BREMSE Systeme für Nutzfahrzeuge GmbH, 80809 München (DE)
(72) Inventor: KISS, Zoltan Richard, 80809 Munich (DE); HAJAS, Balazs, 80809 Munich (DE)

(57) **Abstract**

The present invention relates to a method for detecting the presence of a trailer, comprising: inflating (S1) a trailer supply line (106) and/or using a pressurized trailer supply line (106); exhausting and/or deflating (S2) the trailer supply line (106); obtaining (S3) the pressure being formed in the trailer supply line (106) during inflating (S1) and/or using and/or during exhausting and/or deflating (S2); and determining (S4), if a trailer is connected to the trailer supply line (106), based on the obtained pressure, in particular an obtained pressure curve. Further, the present invention relates to a system (100) for detecting the presence of a trailer and to a vehicle (V), in which said system (100) is included.

## Description

The present invention relates to a method and a system for detecting the presence of a trailer.

Further, the present invention relates to a vehicle, in particular utility vehicle, at least comprising said system for detecting the presence of a trailer.

In general, trailer detection methods are known in the art. In this respect, current trailer detection methods are usually based on an electrical connection or on an engine torque needed while launching a vehicle, in particular a towing vehicle/tractor. However, trailers without having an electronic control unit may not reliably be checked with regard to their connection status. Therefore, no automatic or non-driver triggered trailer release may be performed. If there is no trailer connection status detection, it may happen that the vehicle-trailer-combination may be driven with applied trailer park brakes, which, potentially, could lead to overheating and/or could cause fire in or on the trailer. Hence, in current commercial vehicle applications, there is a need for reliably detecting if a trailer is connected to a (towing) vehicle or not.

In view of the above, it is an object of the invention to provide a method and a system for detecting a trailer existence, respectively the presence of a trailer, solving the above-mentioned problems, in particular, to provide a method and a system for detecting a trailer existence with an enhanced reliability and/or adaptability.

According to the invention, this object is solved by a method for detecting the presence of a trailer according to the independent method claim. Further, according to the invention, this object is also solved by a system for detecting the presence of a trailer according to the independent system claim. Further embodiments are described in the respective dependent claims.

In this respect, a method for detecting the presence of a trailer comprises:
inflating a trailer supply line and/or using a pressurized trailer supply line;
exhausting and/or deflating the trailer supply line;
obtaining the pressure being formed in the trailer supply line during inflating and/or using and/or during exhausting and/or deflating; and
determining, if a trailer is connected to the trailer supply line, based on the obtained pressure, in particular an obtained pressure curve.

In particular, the invention is based on the idea that presence of a trailer may be reliably detected via a pneumatic connection. In this respect, said method may comfortably and/or autonomously be used with vehicle-trailer-combinations being generally used in North America. Since the method applies one or more temporary pneumatic inflation on a trailer supply line while checking a formed pressure increase and/or decrease, based on which characteristics the trailer connection states can be differentiated, a simple and reliable way for detecting the presence of a trailer is provided for all vehicle-trailer-combinations particularly operating pneumatically, such as with respect to braking. In particular, the invention may be used in all vehicle applications, in which a towing vehicle/tractor is equipped with an air treatment unit, and with which a trailer connection is possible. Further, due to said reliable detection achieved by said method, automatic and/or non-driver triggered actions may be applied on a trailer park brake system, which may be essential for comfort and/or autonomous functions. Furthermore, the result of the determination of the method may also be used on its own to determine a trailer connection status, which may provide a further safety feature when using trailers.

It may be conceivable that inflating comprises applying one or more pneumatic inflation pulses to the trailer supply line, wherein an inflation pulse comprises a constant inflation pulse or an inflation pulse having a predefined pressure curve. Accordingly, due to the different and/or individualizable inflation pulses, the reliability of detecting a trailer may be further enhanced due to the specific pressure characteristics being inducible by said distinguishable inflation pulses.

It may be conceivable that determining comprises an evaluation of the obtained pressure, in particular an obtained pressure curve, resulting only from exhausting and/or deflating. Since the determination is based on the obtained pressure resulting only from exhausting and/or deflating, the method does not depend on a pneumatic layout of a vehicle, in particular a towing vehicle/tractor, in which the method is operated, e.g. with respect to the generation of the inflation. In other words, system (e.g. vehicle) pressure dependencies may be eliminated due to the use of deflation characteristics of the trailer supply line instead of inflation characteristics. Hence, the method may be operable by a huge variety of different vehicles, in other words, may have an increased adaptability.

It may be conceivable that determining comprises an evaluation of an obtained pressure, in particular an obtained pressure curve, based on its pressure gradient and/or predefined parameters. This may provide a simple, fast and reliable way for analyzing the obtained pressure. In particular, such parameters may usually be obtainable by sensor/sensing units being already installed in vehicles. Hence, there may be no need for physical modifications of the vehicles, for which the method may be intended.

It may be conceivable that determining comprises an evaluation of an obtained pressure curve based on its duration and/or its one or more pressure gradients. Due to evaluating an obtained pressure curve based on its duration and/or its one or more pressure gradients, even minor or smaller characteristics may be recognizable, to thereby facilitate an enhanced reliability of detecting the presence of a (e.g. specific) trailer and/or a trailer connection status of a (e.g. specific) trailer.

It may be conceivable that the method further comprises providing a reference pressure, in particular a reference pressure curve, wherein determining comprises a comparison of the obtained pressure, in particular the obtained pressure curve, with the reference pressure, in particular the reference pressure curve. In other words, a strategy of the method may be getting a reference characteristic describing a deflation curve of the vehicle, in particular the towing vehicle/tractor, when a/the trailer is detached, wherein this reference curve may be compared with a measured pressure curve. Accordingly, an unreability of predefined parameters in case of different vehicle configurations may be reduced since the evaluation may substantially be based on (pre)learned characteristics. This may further enhance the reliability of the provided method.

It may be conceivable that the reference pressure, in particular the reference pressure curve, is obtained or obtainable by: inflating the trailer supply line having no trailer connected thereto; exhausting and/or deflating the trailer supply line; and obtaining the pressure being formed in the trailer supply line during inflating and/or during exhausting and/or deflating, to thereby obtain the reference pressure, in particular the reference pressure curve. Accordingly, the method may be adapted to any vehicle since an individual reference may be generated for every vehicle. The need for predefined parameters may not apply any more. Furthermore, the method may be conductable or conducted automatically, since an individual reference may be generated for every vehicle.

It may be conceivable that the reference pressure, in particular the reference pressure curve, is obtained or obtainable by only obtaining the pressure being formed in the trailer supply line during exhausting and/or deflating. Accordingly, as described above, the dependency to a pneumatic layout of the vehicle, in particular the towing vehicle/tractor, in which the method is operated, e.g. with respect to the generation of the inflation, may thereby be avoided.

It may be conceivable that determining comprises evaluating, if a reference pressure, in particular a reference pressure curve, is provided, wherein: if the reference pressure, in particular the reference pressure curve, is not provided, determining comprises an evaluation of an obtained pressure, in particular an obtained pressure curve, based on its pressure gradient and/or predefined parameters; and, if the reference pressure, in particular the reference pressure curve, is provided, determining comprises a comparison of the obtained pressure, in particular the obtained pressure curve, with the reference pressure, in particular the reference pressure curve. Accordingly, the method may further provide an additional safety feature, since, e.g. in case of failing to generate a reference pressure, the presence of a trailer may still be reliably detected by using pressure gradients and/or predefined parameters.

Further, the present invention provides a system for detecting the presence of a trailer, wherein the system is capable for and at least comprises a control unit for performing a method as described above and/or below.

It should be understood that any feature and/or advantage and/or property described in connection with the method may also apply to and/or be part of the system, and vice versa.

It may be conceivable that the system further comprises: a unit for inflating a trailer supply line; a unit for exhausting and/or deflating the trailer supply line; and a sensor unit for obtaining the pressure being formed in the trailer supply line during inflating and/or during exhausting and/or deflating, wherein the control unit may be configured for determining, if a trailer is connected to the trailer supply line, based on the obtained pressure, in particular an obtained pressure curve.

It may be conceivable that the control unit is configured for storing one or more reference pressures and/or pressure curves as a basis for determining, if a trailer is connected to the trailer supply line.

It may be conceivable that the control unit is configured for storing a database for storing one or more reference pressures and/or pressure curves of different combinations of vehicles and trailers. Accordingly, since not only reference pressures of vehicles may be stored but also vehicle-trailer-combinations as such, the detection reliability and/or the accuracy regarding a trailer connection status may further be improved.

It may be conceivable that the system further comprises an alarm unit for providing a notification to a user and/or a superordinated system, to which the system is applicable. Accordingly, an enhanced safety may be provided to the user of the system.

Further, the present invention provides a vehicle, in particular utility vehicle, which at least comprises: a system as described above and/or below; and a trailer supply line.

It should be understood that any feature and/or advantage and/or property described in connection with the method and/or the system may also apply to and/or be part of the vehicle, and vice versa.

These and other aspects of the present invention will now be described in more detail, with reference to the appended drawings showing exemplary embodiments of the invention, wherein:
- **Fig. 1**: depicts a diagram of a method for detecting a trailer presence according to an exemplary embodiment of the present invention;
- **Fig. 2**: depicts a diagram of a method for detecting a trailer presence according to another exemplary embodiment of the present invention;
- **Fig. 3**: depicts a diagram of a part of a method for detecting a trailer presence according to another exemplary embodiment of the present invention; and
- **Fig. 4**: schematically depicts a diagram of a system for detecting a trailer presence according to another exemplary embodiment of the present invention.

Identical or functionally equivalent elements are denoted with the same reference signs throughout the figures.

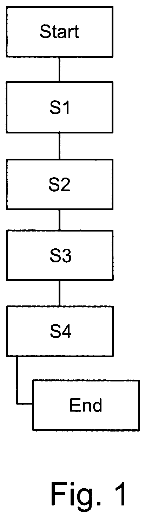

Turning to **Fig. 1****,** a diagram of a method for detecting a trailer presence according to an exemplary embodiment of the present invention is shown.

The method for detecting a trailer presence comprises a step of inflating a trailer supply line 106, step S1. However, it may additionally or alternatively be conceivable that the method for detecting a trailer presence comprises a step of using a pressurized trailer supply line 106. It may also be conceivable that atmospheric pressure conditions may be applied and/or occur and/or be present.

In particular, the trailer supply line 106 is comprised in a vehicle V and may be part of a parking brake system of the vehicle V.

In particular, inflating S1 comprises applying one or more pneumatic inflation pulses to the trailer supply line 106.

In this respect, an inflation pulse can be formed as a constant inflation pulse or an inflation pulse having a predefined pressure curve.

The method further comprises exhausting and/or deflating the trailer supply line 106, step S2.

The method further comprises obtaining the pressure being formed in the trailer supply line 106 during inflating S1 and/or during exhausting and/or deflating S2, step S3.

The method further comprises determining, if a trailer is connected to the trailer supply line 106, based on the obtained pressure, in particular an obtained pressure curve, step S4.

Preferably, the obtained pressure, in particular an obtained pressure curve, is evaluated based on step S2.

In other words, determining S4 comprises an evaluation of the obtained pressure, in particular an obtained pressure curve, resulting only from exhausting and/or deflating S2.

During determining S4, the obtained pressure, in particular an obtained pressure curve, is evaluated based on its pressure gradient and/or predefined parameters.

In other words, the step of determining S4 comprises an evaluation of the obtained pressure, in particular an obtained pressure curve, based on its pressure gradient and/or predefined parameters.

It may be conceivable that the predefined parameters particularly include time parameters, e.g., duration, maximum and/or minimum parameters, threshold parameters, tolerance parameters, etc.

In particular, the obtained pressure, in particular an obtained pressure curve, is evaluated based on its duration and/or its one or more pressure gradients, during determining S4.

In other words, the step of determining S4 comprises an evaluation of an or the obtained pressure curve based on its duration and/or its one or more pressure gradients.

Additionally or alternatively, the evaluation of the obtained pressure curve is based on a comparison of a reference curve.

Accordingly, prior to determining S4, a reference pressure, in particular a reference pressure curve, is provided.

Hence, the method further comprises providing a reference pressure, in particular a reference pressure curve.

The step of determining S4 comprises a comparison of the obtained pressure, in particular the obtained pressure curve, with the reference pressure, in particular the reference pressure curve.

The reference pressure, in particular the reference pressure curve, is obtained or obtainable by:
- inflating the trailer supply line 106 having no trailer connected thereto;
- exhausting and/or deflating the trailer supply line 106; and
- obtaining the pressure being formed in the trailer supply line 106 during exhausting and/or deflating, to thereby obtain the reference pressure, in particular the reference pressure curve.

In this respect, prior to step S1, the before-mentioned steps for obtaining the reference pressure, in particular the reference pressure curve, are conducted or conductable.

It should be understood that the before-mentioned steps can be included in the method, e.g., as a group step denoted with S0.

Furthermore, the step of determining S4 comprises evaluating, if a reference pressure, in particular a reference pressure curve, is provided.

If the reference pressure, in particular the reference pressure curve, is not provided, the step of determining S4 comprises an evaluation of the obtained pressure, in particular an obtained pressure curve, based on its pressure gradient and/or predefined parameters.

If the reference pressure, in particular the reference pressure curve, is provided, the step of determining S4 comprises a comparison of the obtained pressure, in particular the obtained pressure curve, with the reference pressure, in particular the reference pressure curve.

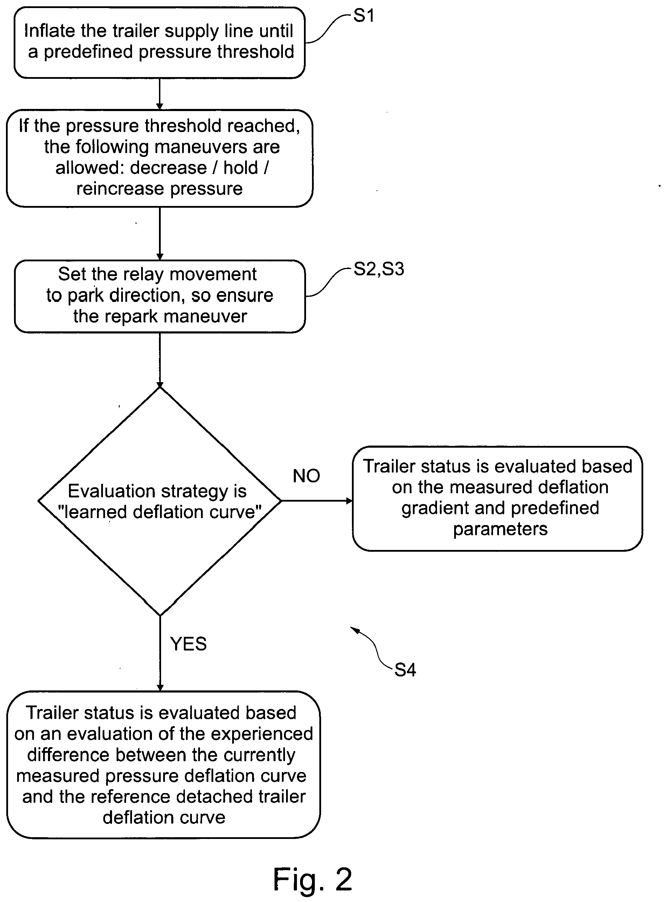

Turning to Fig. 2, a diagram of a method for detecting a trailer presence according to another exemplary embodiment of the present invention is shown.

The method of **Fig. 2** is substantially the same as the method of **Fig. 1****,** wherein, accordingly, only the differences are described in the following.

In the present embodiment, the method is conducted by a parking brake system, which is operated in a substantially pneumatic manner. The parking brake system is included in a vehicle.

The step of inflating S1 the trailer supply line 106 is conducted until a predefined pressure threshold is reached in the trailer supply line 106.

If the pressure threshold is reached, the pressure is decreased and/or held and/or reincreased during the step of inflating S1, to thereby form a pneumatic inflation pulse having a predefined pressure curve.

Subsequently, a relay movement is set to a park direction by the parking brake system for a repark maneuver, to thereby initiate the step of exhausting and/or deflating S2 the trailer supply line 106.

Simultaneously, the step of obtaining S3 the pressure being formed in the trailer supply line 106 during inflating S1 and/or during exhausting and/or deflating S2 is conducted.

Subsequently, during the step of determining S4, it is evaluated, if a reference pressure, in particular a reference pressure curve, is provided.

In other words, it is evaluated, if the evaluation strategy is based on a learned / prelearned deflation curve, i.e. a reference pressure and/or a reference pressure curve, or not.

If the reference pressure, in particular the reference pressure curve, is not provided, the step of determining S4 comprises an evaluation of the obtained pressure, in particular an obtained pressure curve, based on its pressure gradient and/or predefined parameters.

If the reference pressure, in particular the reference pressure curve, is provided, the step of determining S4 comprises a comparison of the obtained pressure, in particular the obtained pressure curve, with the reference pressure, in particular the reference pressure curve.

Based on the evaluation or the comparison with respect to pressure characteristics of the obtained pressure, in particular an obtained pressure curve, it is determined or determinable, if a trailer is connected to the trailer supply line 106.

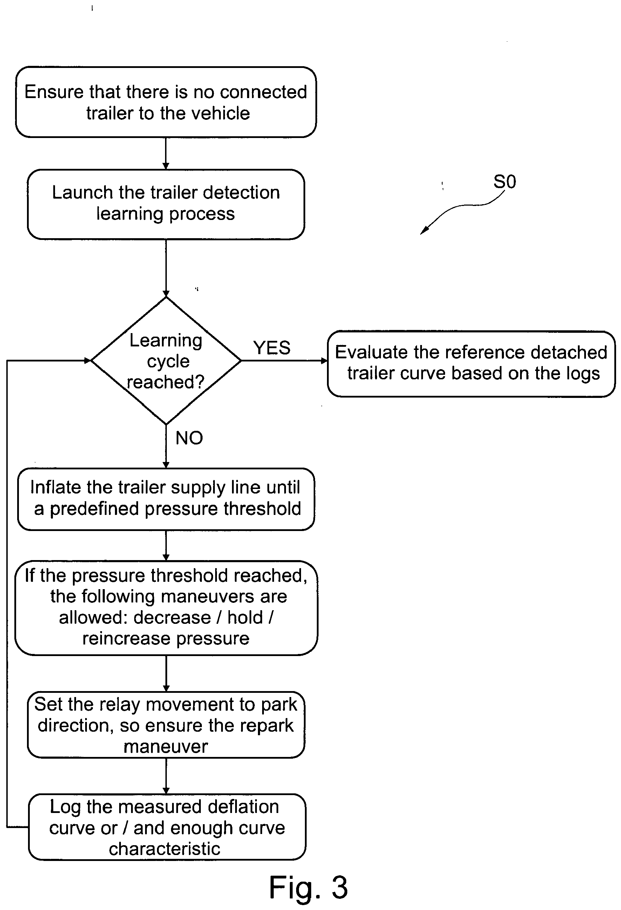

Turning to **Fig. 3****,** a diagram of a part of a method for detecting a trailer presence according to another exemplary embodiment of the present invention is shown.

The method of **Fig. 3** substantially forms a part of the method of **Fig. 1** **and/or** **Fig. 2****.** In particular, the method of **Fig. 3** shows the generation of the reference pressure, in particular the reference pressure curve, as already described herein. Accordingly, only the differences and/or additional details are described in the following.

As already outlined above, the method of **Fig. 3** can be included in the group step S0.

Firstly, it is ensured that no trailer is connected to a/the vehicle V.

Subsequently, a process is launchable for obtaining the reference pressure, in particular the reference pressure curve.

In other words, a trailer detection learning process is launched or launchable.

If there has already been a successful learning cycle, i.e. the reference pressure has already been obtained, the reference pressure is evaluated with regards to characteristics on a system log, e.g. a control unit 102, to thereby form the basis for the step of determining S4.

If there has not already been a successful learning cycle, i.e. the reference pressure has not already been obtained, the trailer supply line 106 is inflated until a predefined pressure threshold is reached in the trailer supply line 106.

If the pressure threshold is reached, the pressure is decreased and/or held and/or reincreased, to thereby form a pneumatic inflation pulse having a predefined pressure curve.

Subsequently, a relay movement is set to a park direction by the parking brake system for a repark maneuver, to thereby initiate exhausting and/or deflating of the trailer supply line 106.

Simultaneously, the pressure being formed in the trailer supply line 106 during inflating S1 and/or during exhausting and/or deflating S2 is obtained.

Finally, the obtained pressure/pressure curve during deflation and/or its characteristics are logged and/or stored, to thereby generate the reference pressure, in particular the reference pressure curve for the step of determining S4.

With reference to **Figs. 1 to 3****,** the invention is particularly based on the idea that a trailer presence may be reliably detected via a pneumatic connection. Since the method applies one or more temporary pneumatic inflation on the trailer supply line 106 while checking a formed pressure increase and/or decrease, based on which characteristics the trailer connection states can be differentiated, a simple and reliable way for detecting the presence of a trailer is provided for all vehicle-trailer-combinations particularly operating pneumatically, such as with respect to braking. Further, due to said reliable detection achieved by said method, automatic and/or non-driver triggered actions may be applied on a trailer park brake system, which may be essential for comfort and/or autonomous functions. Furthermore, the result of the determination of the method may also be used on its own to determine a trailer connection status, which may provide a further safety feature when using trailers.

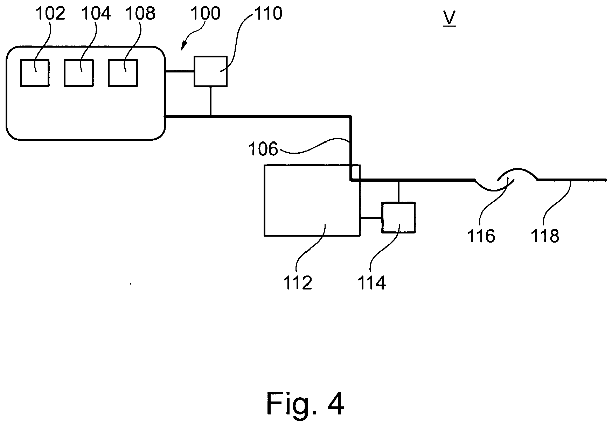

Turning to **Fig. 4****,** a diagram of a system 100 for detecting a trailer presence according another exemplary embodiment of the present invention is schematically shown.

It should be understood that any feature and/or advantage and/or property described in connection with the method may also apply to and/or be part of the system 100, and vice versa.

The system 100 is mountable or mounted in or on a vehicle V.

In other words, a vehicle V at least comprises said system 100.

In particular, the vehicle V is a utility vehicle, a towing vehicle and/or a tractor.

It should be further understood that any feature and/or advantage and/or property described in connection with the method and/or the system 100 may also apply to and/or be part of the vehicle V, and vice versa.

The vehicle V further comprises an air treatment device 112 having a separate sensor unit 114 and a connector device 116 for pneumatically connecting a trailer supply line 106 of the vehicle V to a trailer (cf. trailer side 118 of supply line).

The connector device 116 may be, e.g., a gladhand connector.

The trailer supply line 106 is included in the vehicle V, in which the system 100 is mountable or mounted. In other words, the vehicle V comprises said trailer supply line 106. The trailer supply line 106 is configured to supply pneumatic pressure to the trailer.

It may be conceivable that the trailer supply line 106 is a pressurized trailer supply line 106.

The system 100 and the air treatment device 112 are disposed in and/or on and/or at a trailer supply line 106.

The system (at least) comprises a control unit 102 for performing the method as described herein, in particular as described in connection with **Figs. 1****,** **2** **and/or 3.**

The system 100 comprises a unit 104 for inflating the trailer supply line 106.

The system 100 comprises a unit 108 for exhausting and/or deflating the trailer supply line 106.

The system 100 comprises a sensor unit 110. It may be conceivable that the system 100 comprises one or more sensor units 110 being configured as the before-mentioned sensor unit 110.

Additionally or alternatively, it may be conceivable that the sensor unit 114 of the air treatment device 112 may be used as the sensor unit 110 of the system 100 and/or the sensor unit 114 of the air treatment device 112 may be part of the system 100 as an additional sensing unit.

The pressure being formed or formable in the trailer supply line 106 during inflating and/or during exhausting and/or deflating is obtained or obtainable by the sensor unit 110.

In other words, the sensor unit 110 is configured for obtaining the pressure being formed in the trailer supply line 106 during inflating and/or during exhausting and/or deflating.

The obtained pressure, in particular an obtained pressure curve, is analyzed or analyzable by the control unit 102 in order to determine, if a trailer is connected to the trailer supply line 106.

In other words, the control unit 102 is configured for determining, if a trailer is connected to the trailer supply line 106, based on the obtained pressure, in particular an obtained pressure curve.

In particular, the control unit 102 is configured for storing one or more reference pressures and/or pressure curves as a basis for determining, if a trailer is connected to the trailer supply line 106.

In this respect, the control unit 102 is configured for storing a database for storing one or more reference pressures and/or pressure curves of different combinations of vehicles V and trailers.

The reference pressures and/or reference pressure curves are obtainable as described in connection with **Figs. 1 to 3****.**

Furthermore, the system 100 comprises an alarm unit for providing a notification to a user and/or a superordinated system, to which the system is applicable. In the present embodiment, as shown in **Fig. 4****,** the superordinated system is the vehicle V.

For example, a notification can refer to the presence of the trailer and/or its connection status. Hence, the system 100 provides an additional safety feature with regard to using trailers.

### REFERENCE SIGNS

- 50: step of method
- S1: step of method
- S2: step of method
- S3: step of method
- S4: step of method

- 100: system
- 102: control unit
- 104: unit for inflating
- 106: trailer supply line
- 108: unit for exhausting and/or deflating
- 110: sensor unit
- 112: air treatment device
- 114: sensor unit of air treatment device
- 116: connector device
- 118: trailer side

- V: vehicle

## Claims

1. Method for detecting the presence of a trailer, comprising:
- inflating (S1) a trailer supply line (106) and/or using a pressurized trailer supply line (106);
- exhausting and/or deflating (S2) the trailer supply line (106);
- obtaining (S3) the pressure being formed in the trailer supply line (106) during inflating (S1) and/or using and/or during exhausting and/or deflating (S2); and
- determining (S4), if a trailer is connected to the trailer supply line (106), based on the obtained pressure, in particular an obtained pressure curve.

2. Method according to claim 1,
**characterized in that**
inflating (S1) comprises applying one or more pneumatic inflation pulses to the trailer supply line (106), wherein an inflation pulse comprises a constant inflation pulse or an inflation pulse having a predefined pressure curve.

3. Method according to claim 1 or 2,
**characterized in that**
determining (S4) comprises an evaluation of the obtained pressure, in particular an obtained pressure curve, resulting only from exhausting and/or deflating (S2).

4. Method according to one of claims 1 to 3,
**characterized in that**
determining (S4) comprises an evaluation of an obtained pressure, in particular an obtained pressure curve, based on its pressure gradient and/or predefined parameters.

5. Method according to claim 4,
**characterized in that**
determining (S4) comprises an evaluation of an obtained pressure curve based on its duration and/or its one or more pressure gradients.

6. Method according to one of claims 1 to 5,
**characterized in that**
the method further comprises providing a reference pressure, in particular a reference pressure curve, wherein determining comprises a comparison of the obtained pressure, in particular the obtained pressure curve, with the reference pressure, in particular the reference pressure curve.

7. Method according to claim 6,
**characterized in that**
the reference pressure, in particular the reference pressure curve, is obtained or obtainable by:
- inflating the trailer supply line (106) having no trailer connected thereto;
- exhausting and/or deflating the trailer supply line (106); and
- obtaining the pressure being formed in the trailer supply line (106) during inflating and/or during exhausting and/or deflating, to thereby obtain the reference pressure, in particular the reference pressure curve.

8. Method according to claim 7,
**characterized in that**
the reference pressure, in particular the reference pressure curve, is obtained or obtainable by only obtaining the pressure being formed in the trailer supply line (106) during exhausting and/or deflating.

9. Method according to one of claims 1 to 8,
**characterized in that**
determining (S4) comprises evaluating, if a reference pressure, in particular a reference pressure curve, is provided, wherein:
if the reference pressure, in particular the reference pressure curve, is not provided, determining comprises an evaluation of an obtained pressure, in particular an obtained pressure curve, based on its pressure gradient and/or predefined parameters; and
if the reference pressure, in particular the reference pressure curve, is provided, determining comprises a comparison of the obtained pressure, in particular the obtained pressure curve, with the reference pressure, in particular the reference pressure curve.

10. System (100) for detecting the presence of a trailer, at least comprising a control unit (102) configured for performing a method according to one of claims 1 to 9.

11. System (100) according to claim 10,
**characterized in that**
the system (100) further comprises:
- a unit (104) for inflating a trailer supply line (106);
- a unit (108) for exhausting and/or deflating the trailer supply line (106); and
- a sensor unit (110) for obtaining the pressure being formed in the trailer supply line (106) during inflating and/or during exhausting and/or deflating,
wherein the control unit (102) is configured for determining, if a trailer is connected to the trailer supply line (106), based on the obtained pressure, in particular an obtained pressure curve.

12. System (100) according to claim 10 or 11,
**characterized in that**
the control unit (102) is configured for storing one or more reference pressures and/or pressure curves as a basis for determining, if a trailer is connected to the trailer supply line (106).

13. System (100) according to one of claims 10 to 12,
**characterized in that**
the control unit (102) is configured for storing a database for storing one or more reference pressures and/or pressure curves of different combinations of vehicles (V) and trailers.

14. System (100) according to one of claims 10 to 13,
**characterized in that**
the system (100) further comprises an alarm unit for providing a notification to a user and/or a superordinated system (V), to which the system (100) is applicable.

15. Vehicle (V), in particular utility vehicle, at least comprising:
- a system (100) according to one of claims 10 to 14; and
- a trailer supply line (106).
